## Europäisches Patentamt

## European Patent Office

## Office européen des brevets

(19)

(11) Veröffentlichungsnummer : **0 371 132 B1**

(12) **EUROPÄISCHE PATENTSCHRIFT**

(45) Veröffentlichungstag der Patentschrift :
**19.08.92 Patentblatt 92/34**

(21) Anmeldenummer : **88907452.2**

(22) Anmeldetag : **10.06.88**

(86) Internationale Anmeldenummer :
**PCT/SU88/00133**

(87) Internationale Veröffentlichungsnummer :
**WO 89/12194 14.12.89 Gazette 89/29**

(51) Int. Cl.⁵ : **F16K 31/04**

(54) **ELEKTROANTRIEB.**

(43) Veröffentlichungstag der Anmeldung :
**06.06.90 Patentblatt 90/23**

(45) Bekanntmachung des Hinweises auf die
Patenterteilung :
**19.08.92 Patentblatt 92/34**

(84) Benannte Vertragsstaaten :
**AT DE FR GB IT**

(56) Entgegenhaltungen :
**DE-A- 3 314 781**
**DE-C- 1 550 145**
**FR-A- 2 274 851**
**US-A- 2 956 188**
**US-A- 4 727 762**

(73) Patentinhaber : **PLOTNIKOV, Andrei**
**Dmitrievich**
**pr. Nastavnikov, 25-3-101**
**Leningrad, 195298 (SU)**
**Patentinhaber : POPOV, Nikolai Pavlovich**
**ul. Proletarskaya, 107-76, Kolpino**
**Leningrad, 188639 (SU)**
**Patentinhaber : KLOTSVOG, Grigory**
**Naumovich**
**ul. Gavanskaya 11-43**
**Leningrad, 199106 (SU)**

(72) Erfinder : **PLOTNIKOV, Andrei Dmitrievich**
**pr. Nastavnikov, 25-3-101**
**Leningrad, 195298 (SU)**
**Erfinder : POPOV, Nikolai Pavlovich**
**ul. Proletarskaya, 107-76, Kolpino**
**Leningrad, 188639 (SU)**
**Erfinder : KLOTSVOG, Grigory Naumovich**
**ul. Gavanskaya 11-43**
**Leningrad, 199106 (SU)**

(74) Vertreter : **Nix, Frank Arnold, Dr.**
**Kröckelbergstrasse 15**
**W-6200 Wiesbaden (DE)**

EP 0 371 132 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

EP 0 371 132 B1

## Beschreibung

### Gebiet der Technik

Die Erfindung bezieht sich auf Vorrichtungen, die zur Steuerung von Mechanismen mit einer fortschreitenden Stangenbewegung der Stellglieder bestimmt sind, und insbesondere auf Elektroantriebe zur Steuerung von Rohrleitungsarmaturen. Am vorteilhaftesten kann die Erfindung in der chemischen, erdölverarbeitenden Industrie, in der Gas-, Zellstoff- und Papierindustrie, in Kernkraftwerken, in der Eisen-. und Nichteisenmetallurgie und in anderen Industriezweigen zum Einsatz kommen.

### Vorhergehender Stand der Technik

Elektroantriebe, mit denen Stellmechanismen von Rohrleitungsarmaturen bestückt werden, sollen Begrenzer der auf einen Stellmechanismus übertragenen Axialkräfte bzw. Drehmomente aufweisen. Dabei ist es in den meisten Fällen zweckmäßig, den besagten Axialkraftbegrenzer sowohl beim Öffnen als auch beim Schließen einer Absperrarmatur zur Verfügung zu haben. Damit wird das Vorhandensein zweier Begrenzer bedingt, was zu einer Vergrößerung der Außenabmessungen des Elektroantriebs führt.

Es ist ein Elektroantrieb mit einem Elektromotor, einer mit einem Stellglied verbundenen und durch ein schrägverzahntes Stirnradgetriebe mit der Elektromotorwelle getippelten Spindel und einem Axialkraftbegrenzer bekannt, der in Form von zwei auf der Elektromotorwelle längs dieser angeordneten Federn ausgeführt ist, zwischen denen mit Möglichkeit einer axialen Verschiebung das Antriebszahnrad des besagten Stirnradgetriebes angebracht ist. Jede dieser Federn ist mit einem entsprechenden Mikroschalter verbunden (DE, C,1155950).

Bei Überschreitung der Axialkraft in der Spindel wird deren Bewegung verlangsamt und das daran angebrachte angetriebene Zahnrad des Stirnradgetriebes verlangsamt auch seine Drehbewegung, dabei setzt das Antriebszahnrad seine Drehbewegung fort. Da eine Kraftkomponente besteht, die längs der Achse gerichtet ist, wird das Antriebszahnrad in der axialen Richtung zur einen oder anderen Seite in Abhängigkeit vom Spindeldrehsinn bewegt und überwindet den Widerstand der entsprechenden Feder. Diese Feder wird zusammengedrückt und öffnet dabei den entsprechenden Mikroschalter, der Elektromotor bleibt stehen.

Ein Nachteil dieses Elektroantriebs besteht in vergrößerten Außenabmessungen, da im Axialkraftbegrenzer zwei Federn vorhanden sind, die längs der Elektromotorwelle für zwei gegenseitige Bewegungsrichtungen der Spindel angebracht sind.

Es ist ein Elektroantrieb mit einem Grundrahmen, einem Elektromotor, der ein Gehäuse und, darin untergebracht, einen Ständer und einen hohlen Läufer enthält, einer im hohlen Läufer untergebrachten Spindel, einem Axialkraftbegrenzer, der eine Scheibe und ein mit dem einen Ende mit der Scheibe in Berührung kommendes elastisches Element aufweist, und einer Baugruppe bekannt, die mit dem Axialkraftbegrenzer kinematisch gekuppelt und mit Möglichkeit axialer Bewegung ausgeführt ist, dabei ist der Axialkraftbegrenzer zwischen der Bezugsfläche des Grundrahmens und der Druckfläche der mit dem Axialkraftbegrenzer kinematisch gekuppelten Baugruppe angeordnet (FR, B, 2274851). In dieser Vorrichtung dient als Baugruppe, die mit dem Axialkraftbegrenzer kinematisch gekuppelt ist, eine Gangmutter, die gegen Durchdrehen gegenüber dem Läufer durch eine Feder gesichert ist und die Möglichkeit einer gewissen axialen Bewegung über die Spindel gegenüber dem Läufer hat. Der Betrag dieser Bewegung wird mit Hilfe von zwei Axialkraftbegrenzern begrenzt, die in der Bewegungsrichtung der Gangmutter auf zwei gegenüberliegenden Seiten angeordnet sind. Bei einer Überschreitung des Einstellwertes der auf einen Stellmechanismus übertragenen Axialkraft bleibt die Spindel stehen und die Gangmutter beginnt, indem sie den Widerstand eines elastischen Elementes in diesem oder jenem (in Abhängigkeit von der Bewegungsrichtung der Spindel) Axialhubbegrenzer überwindet, in axialer Richtung über das Gewinde der stehengebliebenen Spindel sich zu bewegen und begrenzt dadurch die Axialkraft, die auf den Stellmechanismus übertragen wird.

Ein Nachteil der beschriebenen Vorrichtung besteht in größeren Außenabmessungen des Elektroantriebs über seine Länge, die durch die zwei Axialbegrenzer bedingt sind, die auf den gegenüberliegenden Gangmutterseiten angeordnet sind. Außerdem macht das Vorhandensein zweier Axialkraftbegrenzer die Konstruktion der Vorrichtung komplizierter.

### Offenbarung der Erfindung

Der Erfindung liegt die Aufgabe zugrunde, einen Elektroantrieb zu schaffen, bei dem ein Axialkraftbegrenzer derart ausgeführt ist, daß beim Vorhandensein nur eines Axialkraftbegrenzers eine Axialkraftbegrenzung bei der Vorwärts- und Rückwärtsbewegung der Spindel gewährleistet wird, wodurch die Außenabmessungen

2

des Elektroantriebs verkleinert und seine Konstruktion vereinfacht werden.

Diese Aufgabe wird ausgehend von einem Elektroantrieb mit einem Grundrahmen, einem Elektromotor, der ein Gehäuse und, darin angeordnet, einen Ständer und einen hohlen Läufer enthält, einer Spindel, die im hohlen Läufer angeordnet ist, einem Axialkraftbegrenzer, der eine Scheibe und ein mit der Scheibe mit dem einen Ende in Berührung kommendes elastisches Element enthält, einer Baugruppe, die mit dem Axialkraftbegrenzer kinematisch gekuppelt und mit Möglichkeit einer axialen Bewegung ausgeführt ist, wobei der Axialkraftbegrenzer zwischen der Bezugsfläche des Grundrahmens und der Druckfläche der mit dem Axialkraftbegrenzer kinematisch gekuppelten Baugruppe angeordnet ist, erfindungsgemäß dadurch gelöst, daß als die mit dem Axialkraftbegrenzer kinematisch gekuppelte Baugruppe das Gehäuse des Elektromotors dient und daß der Axialkraftbegrenzer mit einer zusätzlichen Scheibe versehen ist, die mit dem anderen Ende des elastischen Elementes in Berührung kommt, wobei der besagte Grundrahmen mit einem Anschlag versehen ist, der auf der Seite der Druckfläche des Elektromotorgehäuses ausgeführt ist, und das Elektromotorgehäuse mit einem Anschlag versehen ist, der auf der Seite der Bezugsfläche des Grundrahmens ausgeführt ist. Auf diese Weise berührt die eine Scheibe des Axialkraftbegrenzers die Bezugsfläche des Grundrahmens und den Anschlag des Elektromotorgehäuses und die andere Scheibe berührt die Druckfläche des Elektromotorgehäuses und den Anschlag des Grundrahmens.

Die im Axialkraftbegrenzer vorhandene zusätzliche Scheibe, die mit dem anderen Ende des elastischen Elementes in Berührung kommt, bringt eine Anordnung des elastischen Elementes zwischen zwei Scheiben mit sich, wodurch ein Zusammendrücken des elastischen Elementes des Axialkraftbegrenzers bei der Vorwärts- und Rückwärtsbewegung der Spindel und ein Ausschalten des Elektromotors sichergestellt werden.

Die Anwendung des Elektromotorgehäuses als Baugruppe, die mit dem Axialkraftbegrenzer kinematisch gekuppelt und mit Möglichkeit einer axialen Bewegung ausgeführt ist, und die am Elektromotorgehäuse und am Grundrahmen auf die vorstehend beschriebene Art und Weise ausgeführten Anschläge gewährleisten eine Axialkraftbegrenzung bei Spindelbewegungen in den beiden Richtungen mit Hilfe nur eines Axialkraftbegrenzers, wodurch eine Verkleinerung der Außenabmessungen des Elektroantriebs und eine Vereinfachung seiner Konstruktion sichergestellt werden.

## Kurze Beschreibung der Zeichnungen

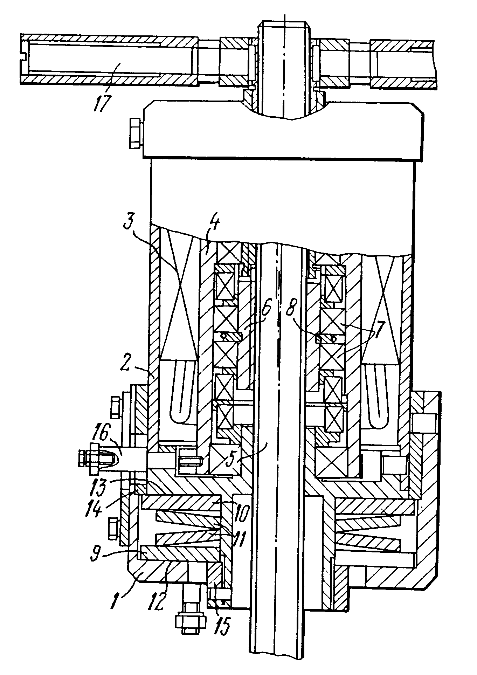

Die Erfindung wird durch eine ausführliche Beschreibung der erfindungsgemäßen Ausführung eines Elektroantriebs unter Bezugnahme auf die Zeichnung näher erläutert, die den erfindungsgemäßen Elektroantrieb im Schnitt zeigt.

## Beste Ausführungsvariante der Erfindung

Der erfindungsgemäße Elektroantrieb enthält einen Grundrahmen 1 und einen Elektromotor mit dem Gehäuse 2, worin ein Ständer 3 und ein hohler Läufer 4 angeordnet sind. Im hohlen Läufer 4 ist längs dessen Achse eine Spindel 5 angeordnet, die mit einem Stellmechanismus gekuppelt ist (zur Vereinfachung der Zeichnung ist keine Kupplung eingezeichnet). Auf der Spindel 5 ist exzentrisch zu deren Achse eine Gangmutter 6 angeordnet, die vom Läufer 4 über Lager 7 angetrieben wird und gegen axiale Verschiebung gegenüber dem Läufer 4 mit Hilfe einer Ringscheibe 8 gesichert ist. Der Elektroantrieb enthält einen Axialkraftbegrenzer, der zwei Scheiben 9 und 10 und ein zwischen ihnen angeordnetes elastisches Element 11 - eine Blattfeder - enthält, deren Enden die entsprechenden Scheiben 9 und 10 berühren. Der Grundrahmen 1 hat eine Bezugsfläche 12 und das Gehäuse 2 des Elektromotors hat eine Druckfläche 13. Der Grundrahmen 1 ist mit einem Anschlag 14 versehen, der auf der Seite der Druckfläche 13 des Gehäuses 2 des Elektromotors ausgeführt ist, und das Gehäuse 2 des Elektromotors ist mit einem Anschlag 15 versehen, der auf der Seite der Bezugsfläche 12 des Grundrahmens 1 ausgeführt ist. Auf diese Weise berührt die Scheibe 9 des Axialkraftbegrenzers die Bezugsfläche 12 des Grundrahmens 1 und den Anschlag 15 des Gehäuses 2 des Elektromotors und die Scheibe 10 berührt die Druckfläche 13 des Gehäuses 2 des Elektromotors und den Anschlag 14 des Grundrahmens 1.

Das Gehäuse 2 des Elektromotors ist axial verschiebbar gegenüber dem Grundrahmen ausgeführt und stellt jene Baugruppe dar, die mit dem Axialkraftbegrenzer kinematisch gekuppelt ist. Eine axiale Bewegung des Gehäuses 2 des Elektromotors wird durch starre Verbindung des Läufers 4 des Elektromotors mit der Gangmutter 6 bewirkt.

Diese Ausführung des Axialkraftbegrenzers und die kinematische Kupplung des Gehäuses 2 des Elektromotors mit dem Axialkraftbegrenzer gewährleisten eine Begrenzung der Axialkraft mit Hilfe nur eines Begrenzers, wodurch die Außenabmessungen des Elektroantriebs verkleinert und dessen Konstruktion vereinfacht werden.

Das Gehäuse 2 des Elektromotors ist mit Hilfe eines Steuerstiftes 16 mit einem (nicht eingezeichneten) Schalter des Elektromotors verbunden. Der Elektroantrieb ist mit einem Reservehandantrieb 17 versehen.

Der erfindungsgemäße Elektroantrieb funktioniert wie folgt.

Bei eingeschaltetem Elektromotor wird eine Kraft vom Läufer 4 über die Lager 7 und die Gangmutter 6 auf die Spindel 5 übertragen, die bei der Drehbewegung der Gangmutter 6 in Axialrichtung bewegt wird. Dabei wird in Abhängigkeit vom Drehsinn des Läufers 4 das mit der Spindel 5 gekuppelte Absperrorgan eines Stellmechanismus geöffnet bzw. geschlossen. Wenn die axiale Beanspruchung des Absperrorgans die Kraft überschreitet, auf welche das elastische Element 11 eingestellt worden ist, bleibt die Spindel 5 stehen, der Läufer 4 dreht sich weiter und dreht die Gangmutter 6, die über das Gewinde der stehengebliebenen Spindel 5 in Axialrichtung, z.B. nach unten nebst dem Läufer 4, dem Ständer 3 und dem Gehäuse 2 des Elektromotors bewegt wird. Dabei drückt das Gehäuse 2 des Elektromotors mit seiner Druckfläche 13 gegen die Scheibe 10 des Axialkraftbegrenzers, preßt das elastischen Element zusammen und überwindet den Widerstand, auf welchen das elastische Element 11 eingestellt worden ist. Dabei stützt sich die Scheibe 9 des Axialkraftbegrenzers gegen die Bezugsfläche 12 des Grundrahmens 1 ab. Der mit dem Gehäuse 2 des Elektromotors verbundene Steuerstift 16 betätigt den Schalter des Elektromotors, und der Elektroantrieb bleibt stehen.

Bei Drehbewegung des Läufers 4 im Gegensinn wird die Spindel 5 auch in die entgegengesetzte Richtung bewegt, dabei wird bei Überschreitung der Axialkraft die Gangmutter 6 über das Gewinde der stehengebliebenen Spindel 5 nach oben bewegt.

Gleichzeitig wird das Gehäuse 2 des Elektromotors auch nach oben bewegt. Dabei drückt der Anschlag 15 des Gehäuses 2 des Elektromotors gegen die Scheibe 9 des Axialkraftbegrenzers und preßt das elastische Element 11 zusammen. Die Scheibe 10 des Axialkraftbegrenzers stützt sich dabei gegen den Anschlag 14 des Grundrahmens 1 ab. Der Steuerstift 16 betätigt bei Bewegung des Gehäuses 2 des Elektromotors den Schalter des Elektromotors, und der Elektroantrieb bleibt stehen.

Industrielle Anwendbarkeit

Am vorteilhaftesten kann die Erfindung in der chemischen, der erdölverarbeitenden Industrie, in der Gas-, der Zellstoff- und Papierindustrie, in der Eisen- und Nichteisenmetallurgie, in Kernkraftwerken und in anderen Industriezweigen zum Einsatz kommen.

**Patentansprüche**

1. Elektroantrieb mit einem Grundrahmen, (1) einem Elektromotor, der ein Gehäuse (2) und darin angeordnet, einen Ständer (3) und einen hohlen Läufer (4) einschließt, einer Spindel (5), die im hohlen Läufer angeordnet ist, einem Axialkraftbegrenzer, der eine Scheibe (9) und ein mit der Scheibe (9) mit dem einen Ende in Berührung kommendes elastisches Element (11) enthält, einer Baugruppe, die mit dem Axialkraftbegrenzer kinematisch gekuppelt und mit Möglichkeit einer axialen Bewegung ausgeführt ist, wobei der Axialkraftbegrenzer zwischen der Bezugsfläche (12) des Grundrahmens und der Druckfläche (13) der mit ihm kinematisch gekuppelten Baugruppe angeordnet ist, **dadurch gekennzeichnet** y daß als Baugruppe, die mit dem Axialkraftbegrenzer kinematisch gekuppelt ist, das Gehäuse (2) des Elektromotors dient und daß der Axialkraftbegrenzer mit einer zusätzlichen Scheibe (10) versehen ist, die mit dem anderen Ende des elastischen Elementes (11) in Berührung kommt, wobei der besagte Grundrahmen mit einem Anschlag (14) versehen ist, der auf der Seite der Druckfläche (13) des Elektromatorgehäuses ausgeführt ist, und das Elektromotorgehäuse mit einem Anschlag (15) versehen ist, der auf der Seite der Bezugsfläche (12) des Grundrahmens ausgeführt ist.

**Claims**

1. Electrical drive having a base frame (1), an electric motor, which includes a housing (2) and, arranged therein, a stator (3) and a hollow rotor (4), a spindle (5), which is arranged in the hollow rotor, an axial force limiter, which contains a disc (9) and an elastic element (11), one end of which comes into contact with the disc (9), an assembly, which is kinematically coupled to the axial force limiter and is constructed with the capability for axial movement, the axial force limiter being arranged between the reference surface (12) of the base frame and the pressure surface (13) of the assembly which is kinematically coupled to it, characterised in that the housing (2) of the electric motor is used as the assembly which is kinematically coupled to the axial force limiter, and in that the axial force limiter is provided with an additional disc (10), which comes into contact with the other end of the elastic element (11), the said base frame being provided with a stop (14) which is constructed on the side of the pressure surface (13) of the electric motor housing, and the electric motor housing being provided with a stop (15) which is constructed on the side of the reference surface (12) of the base frame.

**Revendications**

1. Entraînement électrique, comprenant un bâti de base (1), un moteur électrique qui comprend un carter (2) dans lequel sont disposés un stator (3) et un rotor creux (4), une broche (5) qui est disposée dans le rotor creux, un limiteur de force axiale qui comprend un disque (9) et un élément élastique (11) entrant en contact par une de ses extrémités avec le disque (9), et un groupe constructif qui est cinématiquement couplé au limiteur de force axiale et est réalisé avec une possibilité de déplacement axial, le limiteur de force axiale étant disposé entre la face de référence (12) du bâti de base et la face de pression ( 13 ) du groupe constructif cinématiquement couplé au limiteur de force axiale, **caractérisé** en ce que le carter (2) du moteur électrique sert de groupe constructif cinématiquement couplé au limiteur de force axiale, et en ce que le limiteur de force axiale est pourvu d'un disque supplémentaire (10) qui entre en contact avec l'autre extrémité de l'élément élastique (11), le bâti de base étant doté d'une butée (14) qui est réalisée du côté de la face de pression (13) du carter du moteur électrique, et le carter du moteur électrique étant doté d'une butée (15) qui est réalisée du côté de la face de référence (12) du bâti de base.